# EUROPEAN PATENT SPECIFICATION

(11) **EP 4 395 273 B1**
(45) Date of publication and mention of the grant of the patent: **25.03.2026**
(21) Application number: 22883735.7
(22) Date of filing: 12.08.2022
(51) Int. Cl.: H04L 51/06, H04L 51/56, H04L 65/1104, H04M 1/72436, H04L 9/40, H04L 51/066, H04L 51/58, H04L 69/24

(54) **ELECTRONIC DEVICE FOR PROVIDING RCS FUNCTION, AND OPERATION METHOD THEREOF**
ELEKTRONISCHE VORRICHTUNG ZUR BEREITSTELLUNG EINER RCS-FUNKTION UND BETRIEBSVERFAHREN DAFÜR
DISPOSITIF ÉLECTRONIQUE PERMETTANT D'ASSURER UNE FONCTION RCS ET SON PROCÉDÉ DE FONCTIONNEMENT

(30) Priority: 19.10.2021 KR 20210139147
(43) Date of publication of application: 03.07.2024
(73) Proprietor: Samsung Electronics Co., Ltd., Suwon-si, Gyeonggi-do 16677 (KR)
(72) Inventor: LEE, Seongjoon, Suwon-si, Gyeonggi-do 16677 (KR); PARK, Soyeon, Suwon-si, Gyeonggi-do 16677 (KR); PARK, Junhyo, Suwon-si, Gyeonggi-do 16677 (KR); LIM, Chaehyun, Suwon-si, Gyeonggi-do 16677 (KR)
(74) Representative: Gulde & Partner
(86) International application number: PCT/KR2022/012081
(87) International publication number: WO 2023/068507

(56) References cited:
- KR-A- 20130 141 886
- KR-A- 20150 099 885
- KR-A- 20160 113 833
- KR-A- 20210 020 571
- US-A1- 2016 227 003

## Description

### [Technical Field]

Various embodiments of the disclosure relate to a device and a method for providing a rich communication suite or rich communication service (RCS) function in an electronic device.

### [Background Art]

With the development of information and communication technology and semiconductor technology, various types of electronic devices are developing into multimedia devices that provide various multimedia services. The multimedia services may include at least one of a voice call service, a message service, a broadcasting service, a wireless Internet service, a camera service, an electronic payment service, or a music playback service.

Electronic devices may provide various communication functions to users via an RCS function. The RCS function may integrate and provide functions, such as image sharing, message transmission, or file sharing, as well as voice calls via a communication network.

A prior art publication KR 2021 0020571 A generically discloses determining capabilities of an external device by an RCS server.

### [Disclosure of Invention]

### [Technical Problem]

Electronic devices may transmit and/or receive RCS messages when the electronic devices are identified, via capability exchange, to support an RCS function. RCS message transmission may be restricted for a transmission device among electronic devices when information on a reception state of an RCS message from a reception device is not identified. The transmission device may transmit a short message service (SMS) message (or multimedia message service (MMS) message) to the reception device, based on restriction of RCS message transmission.

Electronic devices may not be able to use an RCS transmission function while supporting the RCS function, based on restriction of RCS message transmission of the transmission device.

Various embodiments of the disclosure provide a device and a method for providing an RCS function in an electronic device.

### [Solution to Problem]

According to various embodiments, an electronic device is defined as per the appended claims.

According to various embodiments, an operation method of an electronic device is defined as per the appended claims.

### [Advantageous Effects of Invention]

According to various embodiments of the disclosure, when an electronic device receives, from an external electronic device supporting an RCS, a message (e.g., an SMS message and/or an MMS message) of a different type from an RCS message, the usability of an RCS function can be increased by performing capability exchange with the external electronic device.

### [Brief Description of Drawings]

FIG. 1 is a block diagram of an electronic device in a network environment according to various embodiments;
FIG. 2 is a block diagram of a wireless communication system for message transmission according to various embodiments;
FIG. 3 is a flowchart for performing capability exchange with an external electronic device by an electronic device according to various embodiments;
FIG. 4 is a flowchart for identifying a capability of an external electronic device by an electronic device according to various embodiments;
FIG. 5 is a flowchart for transmitting a capability exchange request message by an electronic device according to various embodiments;
FIG. 6 is a flowchart for message transmission by an external electronic device according to various embodiments;
FIG. 7 is a flowchart for performing capability exchange by an external electronic device according to various embodiments;
FIG. 8 is an example for providing an RCS function by the electronic device according to various embodiments;
FIG. 9 is an example for updating a capability of the external electronic device by the electronic device according to various embodiments; and
FIG. 10 is an example for performing capability exchange with multiple external electronic devices by the electronic device according to various embodiments.

### [Mode for the Invention]

Hereinafter, various embodiments will be described in detail with reference to accompanying drawings.

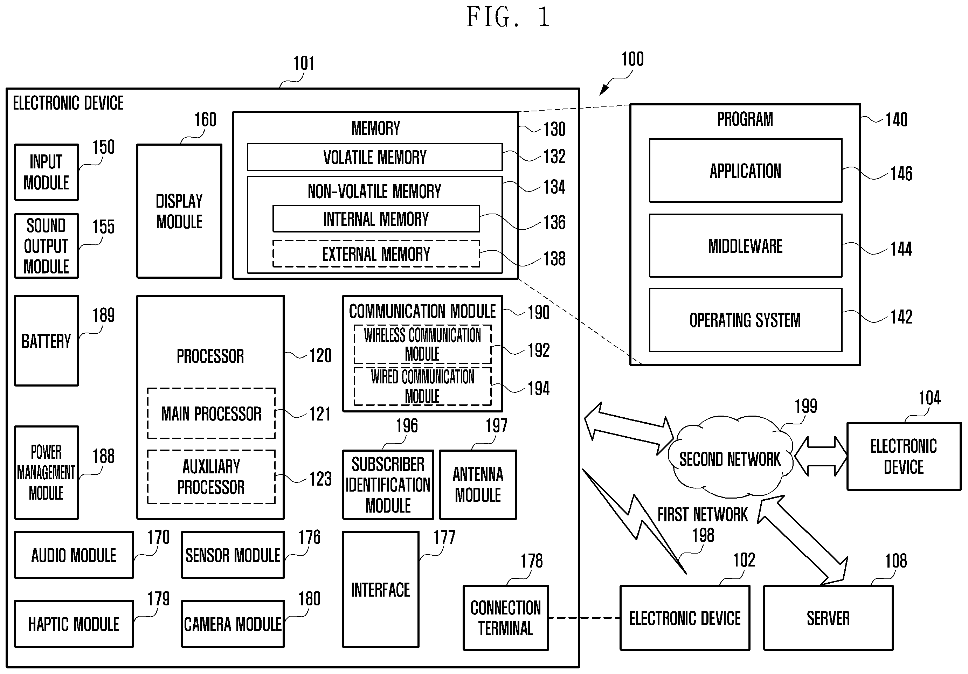

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC. The subscriber identification module 196 may include a plurality of subscriber identification modules. For example, the plurality of subscriber identification modules may store different subscriber information.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band. For example, the plurality of antennas may include a patch array antenna and/or a dipole array antenna.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

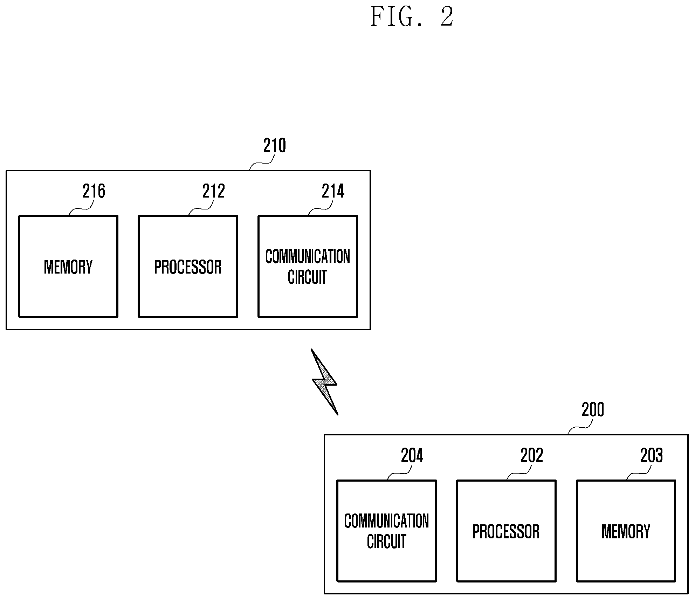

FIG. 2 is a block diagram of a wireless communication system for message transmission according to various embodiments. According to an embodiment, an electronic device 200 and/or an external electronic device 210 of FIG. 2 may be at least partially similar to the electronic device 101 of FIG. 1 or may further include other embodiments of the electronic device 101.

According to various embodiments with reference to FIG. 2, a wireless communication system may include the electronic device 200 and the external electronic device 210. According to an embodiment, the electronic device 200 and the external electronic device 210 may transmit and/or receive messages by using radio resources. According to an embodiment, the electronic device 200 may include a reception device that receives a message from the external electronic device 210. According to an embodiment, the external electronic device 210 may include a transmission device that transmits a message to the electronic device 200.

According to various embodiments, the electronic device 200 may include a processor 202, a communication circuit (or communication circuitry) 204, and/or a memory 206. According to an embodiment, the processor 202 may be substantially the same as the processor 120 of FIG. 1 or may include the processor 120. According to an embodiment, the communication circuit 204 may be substantially the same as the communication module 190 of FIG. 1 or may include the communication module 190. According to an embodiment, the memory 206 may be substantially the same as the memory 130 of FIG. 1 or may include the memory 130. According to an embodiment, the processor 202 may be operatively, functionally, and/or electrically connected to the communication circuit 204 and/or the memory 206.

According to various embodiments, the processor 202 may control the communication circuit 204 to perform capability exchange with the external electronic device 210 for transmission and/or reception of a message. According to an embodiment, the processor 202 may identify the capability of the external electronic device 210 from a request message (e.g., a session initiation protocol (SIP) OPTION request) related to capability exchange, which is received from the external electronic device 210 via the communication circuit 204. According to an embodiment, the processor 202 may control the communication circuit 204 to transmit, to the external electronic device 210, a response message (e.g., an SIP OPTION response) including information on a capability of the electronic device 200 in response to the request message related to capability exchange. According to an embodiment, the processor 202 may store information on the capability of the external electronic device 210 in the memory 206.

According to various embodiments, when it is determined, via capability exchange with the external electronic device 210, that the electronic device 200 and the external electronic device 210 support a first type message, the processor 202 may control the communication circuit 204 to transmit and/or receive the first type message to and/or from the external electronic device 210. As an example, the first type message may include a rich communication suite or rich communication service (RCS) message.

According to an embodiment, when the processor 202 receives a first type message via the communication circuit 204, the processor 202 may decode the first type message and identify the body (or content) of the message transmitted by the external electronic device 210. The processor 202 may output information on the body (or content) of the message transmitted by the external electronic device 210 via a display (not illustrated) of the electronic device 200.

According to an embodiment, the processor 202 may control the communication circuit 204 to transmit, to the external electronic device 210, a message related to a reception state of the first type message. For example, when the first type message is decoded, the message related to the reception state of the first type message may include information on a success of reception. For example, when decoding of the first type message fails, the message related to the reception state of the first type message may include information on a reception failure. For example, the message related to the reception state of the first type message may include a message related to an instant message delivery notification (or an instant message delivery notification (IMDN) message).

According to various embodiments, when the electronic device 200, while supporting the first type message, receives a second type message from the external electronic device 210, the processor 202 may identify the capability of the external electronic device 210. According to an embodiment, when the electronic device 200, while supporting the first type message, receives the second type message from the external electronic device 210 via the communication circuit 204, the processor 202 may acquire information on the capability of the external electronic device 210 from the memory 206. For example, the second type message is a different type of message from the first type message and may include a short message service (SMS) message and/or a multimedia message service (MMS) message.

According to various embodiments, when the second type message is received from the external electronic device 210 that supports the first type message, the processor 202 may control the communication circuit 204 to perform capability exchange with the external electronic device 210. According to an embodiment, when the second type message is received from the external electronic device 210 that supports the first type message, the processor 202 may control the communication circuit 204 to transmit, to the external electronic device 210, a request message (e.g., an SIP OPTION request) including information on the capability of the electronic device 200. For example, when there is no transmission history of the message including information on the capability of the electronic device 200, the processor 202 may control the communication circuit 204 to transmit, to the external electronic device 210, a request message (e.g., an SIP OPTION request) including information on the capability of the electronic device 200. For example, when there is a transmission history of the request message including information on the capability of the electronic device 200, the processor 202 may identify a point in time at which the request message including information on the capability of the electronic device 200 has been transmitted. For example, when the point in time, at which the request message including information on the capability of the electronic device 200 has been transmitted, satisfies a designated transmission condition, the processor 202 may control the communication circuit 204 to transmit, to the external electronic device 210, a request message (e.g., an SIP OPTION request) including information on the capability of the electronic device 200. For example, a state that satisfies the designated transmission condition may include a state in which the request message including information on the capability of the electronic device 200 has been transmitted at a time point before a designated time range from a current time point. For example, when the point in time at which the request message including information on the capability of the electronic device 200 is transmitted does not satisfy the designated transmission condition, the processor 202 may restrict transmission of the request message (e.g., the SIP OPTION request) including information on the capability of the electronic device 200. For example, a state that does not satisfy the designated transmission condition may include a state in which the request message including information on the capability of the electronic device 200 has been transmitted at a time point within the designated time range from a current time point.

According to an embodiment, the processor 202 may identify the capability of the external electronic device 210 from a response message (e.g., an SIP OPTION response) related to capability exchange, which is received from the external electronic device 210 in response to the request message including information on the capability of the electronic device 200 via the communication circuit 204. According to an embodiment, the processor 202 may store, in the memory 206, information on the capability of the external electronic device 210, which is identified via capability exchange with the external electronic device 210.

According to various embodiments, when a first type message is not supported, the processor 202 may generate a list of external electronic devices 210 that support the first type message from among external electronic devices 210 having transmitted a second type message. When a first type message is supported, the processor 202 may control the communication circuit 204 to perform capability exchange with the external electronic devices 210 included in the list of the external electronic devices 210. For example, a state of not supporting the first type message may include a state in which use of a wireless network is restricted. For example, the state of not supporting the first type message may include a state in registration with a transmission server is released. For example, the transmission service may include an RCS server. For example, a state capable of supporting the first type message may include a state in which the use of the wireless network has been resumed. For example, the state capable of supporting the first type message may include a state registered with the transmission server.

According to various embodiments, the communication circuit 204 may support transmission and/or reception of signals between the electronic device 200 and the external electronic device 210. According to an embodiment, the communication circuit 204 may transmit and/or receive a message to and/or from the external electronic device 210 by using radio resources.

According to various embodiments, the memory 206 may store various data used by at least one element (e.g., the processor 202 and/or the communication circuit 204) of the electronic device 200. According to an embodiment, the data may include information on the capability of the electronic device 200 and/or information on the capability of the external electronic device 210. According to an embodiment, the memory 206 may store various instructions executable via the processor 202.

According to various embodiments, the external electronic device 210 may include a processor 212, a communication circuit (or communication circuitry) 214, and/or a memory 216. According to an embodiment, the processor 212 may be substantially the same as the processor 120 of FIG. 1 or may include the processor 120. According to an embodiment, the communication circuit 214 may be substantially the same as the communication module 190 of FIG. 1 or may include the communication module 190. According to an embodiment, the memory 216 may be substantially the same as the memory 130 of FIG. 1 or may include the memory 130. According to an embodiment, the processor 212 may be operatively, functionally, and/or electrically connected to the communication circuit 214 and/or the memory 216.

According to various embodiments, the processor 212 may control the communication circuit 214 to perform capability exchange with the electronic device 200 for transmission and/or reception of a message. According to an embodiment, in order to identify the capability of the electronic device 200 for message transmission, the processor 212 may control the communication circuit 214 to transmit, to the electronic device 200, a request message (e.g., an SIP OPTION request) including information on capability exchange of the external electronic device 210. According to an embodiment, the processor 212 may identify the capability of the electronic device 200 from a response message (e.g., an SIP OPTION response) related to capability exchange, which is received from the electronic device 200 in response to the request message including information on the capability of the external electronic device 210 via the communication circuit 214. According to an embodiment, the processor 212 may store, in the memory 216, information on the capability of the electronic device 200, which is identified via capability exchange with the electronic device 200.

According to various embodiments, when it is determined, via capability exchange with the electronic device 200, that the electronic device 200 and the external electronic device 210 support a first type message, the processor 212 may control the communication circuit 214 to transmit and/or receive the first type message to and/or from the electronic device 200. According to an embodiment, the processor 212 may control the communication circuit 214 to transmit the first type message to the electronic device 200.

According to various embodiments, when transmission of the first type message is determined to have failed, the processor 212 may restrict transmission of a first type message. According to an embodiment, when information on a reception state of the first type message is not received until a designated time elapses after transmission of the first type message to the electronic device 200, the processor 212 may determine that the transmission of the first type message has failed. According to an embodiment, when information on the reception state of the first type message, which is received from the electronic device 200, includes reception failure information, the processor 212 may determine that the transmission of the first type message has failed. According to an embodiment, when transmission of a first type message is restricted, transmission of the first type message is restricted, but the processor 212 may receive the first type message via the communication circuit 214.

According to various embodiments, the processor 212 may control the communication circuit 214 to transmit a second type message to the electronic device 200, based on the restriction on transmission of the first type message. According to an embodiment, when transmission of the first type message is restricted, the processor 212 may control the communication circuit 214 to transmit, to the electronic device 200, a second type message that corresponds to the first type message, the transmission of which to the electronic device 200 is determined to have failed. According to an embodiment, when transmission of the first type message is restricted, the processor 212 may control the communication circuit 214 to transmit, to the electronic device 200, a second type message including the body of a message to be transmitted to the electronic device 200.

According to various embodiments, when transmission of the first type message is restricted, the processor 212 may control the communication circuit 214 to resume transmission of the first type message, based on capability exchange with the electronic device 200. According to an embodiment, the processor 212 may identify the capability of the electronic device 200 from a request message (e.g., an SIP OPTION request) related to capability exchange, which is received from the electronic device 200 while transmission of the first type message is being restricted. When the external electronic device 210 supports the first type message, the processor 212 may control the communication circuit 214 to resume transmission of the first type message. According to an embodiment, the processor 212 may control the communication circuit 214 to transmit, to the electronic device 200, a response message (e.g., an SIP OPTION response) including information on the capability of the external electronic device 210 in response to the request message related to capability exchange.

According to various embodiments, the processor 212 may control the communication circuit 214 to transmit the first type message to the electronic device 200, based on resumption of transmission of the first type message.

According to various embodiments, the communication circuit 214 may support transmission and/or reception of signals between the electronic device 200 and the external electronic device 210. According to an embodiment, the communication circuit 214 may transmit and/or receive a message to and/or from the electronic device 200 by using radio resources.

According to various embodiments, the memory 216 may store various data used by at least one element (e.g., the processor 212 and/or the communication circuit 214) of the external electronic device 210. According to an embodiment, the data may include information on the capability of the electronic device 200 and/or information on the capability of the external electronic device 210. According to an embodiment, the memory 216 may store various instructions executable via the processor 212.

According to various embodiments, an electronic device (e.g., the electronic device 101 of FIG. 1 or the electronic device 200 of FIG. 2) may include: a memory (e.g., the memory 130 of FIG. 1 or the memory 206 of FIG. 2) and a communication circuit (e.g., the communication module 190 of FIG. 1 or the communication circuit 204 of FIG. 2); and at least one processor (e.g., the processor of FIG. 1 or the processor 202 of FIG. 2) operatively connected to the memory and the communication circuit, wherein the processor is configured to, when the electronic device supports a first type message, identify whether a second type message different from the first type message is received from an external electronic device, identify a capability of the external electronic device, based on reception of the second type message from the external electronic device, and when it is determined, based on the capability of the external electronic device, that the external electronic device supports the first type message, perform capability exchange with the external electronic device.

According to various embodiments, the processor may be configured to, based on reception of the second type message from the external electronic device, identify whether information on the capability of the external electronic device exists in the memory, and when the information on the capability of the external electronic device exists in the memory, identify the capability of the external electronic device stored in the memory.

According to various embodiments, the information on the capability of the external electronic device, which is stored in the memory, may be acquired via previously performed capability exchange with the external electronic device.

According to various embodiments, the processor may be configured to, when it is determined, based on the capability of the external electronic device, that the external electronic device supports the first type message, transmit a request message related to capability exchange to the external electronic device, and receive a response message corresponding to the request message from the external electronic device.

According to various embodiments, the processor may be configured to identify whether there exists a transmission history of the request message related to capability exchange, and when there is no transmission history of the request message related to capability exchange, transmit a request message related to capability exchange to the external electronic device.

According to various embodiments, the processor may be configured to, when there exists a transmission history of the request message related to capability exchange, identify a previous transmission time point of the request message related to capability exchange, and when the previous transmission time point of the request message related to capability exchange satisfies a designated transmission condition, transmit a request message related to capability exchange to the external electronic device.

According to various embodiments, the processor may be configured to, when the previous transmission time point of the request message related to capability exchange does not satisfy the designated transmission condition, restrict transmission of a request message related to capability exchange.

According to various embodiments, the request message may include information on a capability of the electronic device, and the response message may include information on the capability of the external electronic device.

According to various embodiments, the processor may be configured to, when it is determined, based on capability exchange with the external electronic device, that the external electronic device does not support the first type message, update information on the capability of the external electronic device, which is stored in the memory, based on not supporting of the first type message.

According to various embodiments, the first type message may include a rich communication suite (RCS) message, and the second type message may include at least one of a short message service (SMS) message or a multimedia message service (MMS) message.

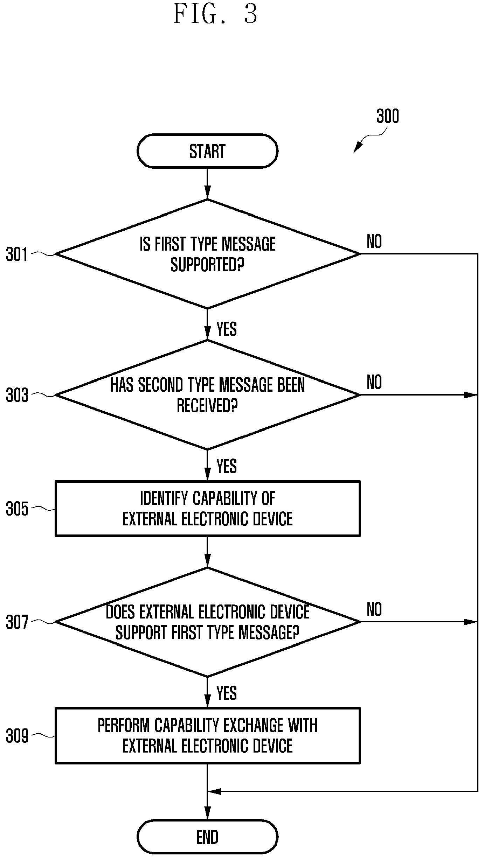

FIG. 3 is a flowchart 300 for performing capability exchange with an external electronic device by an electronic device according to various embodiments. In the following embodiments, respective operations may be sequentially performed, but are not necessarily performed sequentially. For example, the order of respective operations may be changed, and at least two operations may be performed in parallel. According to an embodiment, the electronic device of FIG. 3 may be the electronic device 101 of FIG. 1 or the electronic device 200 of FIG. 2.

According to various embodiments with reference to FIG. 3, the electronic device (e.g., the processor 120 of FIG. 1 or the processor 202 of FIG. 2) may identify, in operation 301, whether the electronic device 200 supports a first type message. According to an embodiment, the processor 202 may identify whether the electronic device 200 supports the first type message, based on the capability of the electronic device 200. As an example, the first type message may include a rich communication suite or rich communication service (RCS) message.

According to various embodiments, the electronic device (e.g., the processor 120 or 202) may terminate an embodiment for performing capability exchange with the external electronic device 210 when the electronic device 200 does not support the first type message (e.g., "No" in operation 301). According to an embodiment, when the electronic device 200 does not support the first type message, the processor 202 may determine that the first type message cannot be transmitted to and/or received from the external electronic device 210. When the processor 202 determines that the first type message cannot be transmitted to and/or received from the external electronic device 210, capability exchange with the external electronic device 210 may be restricted.

According to various embodiments, when the electronic device 200 supports the first type message (e.g., "Yes" in operation 301), the electronic device (e.g., the processor 120 or 202) may identify, in operation 303, whether a second type message is received from the external electronic device 210. For example, the second type message is a different type of message from the first type message and may include a short message service (SMS) message and/or a multimedia message service (MMS) message.

According to various embodiments, when a second type message is received from the external electronic device 210 (e.g., "Yes" in operation 303), the electronic device (e.g., the processor 120 or 202) may identify the capability of the external electronic device 210 in operation 305. According to an embodiment, the processor 202 may identify information on the capability of the external electronic device 210 stored in the memory 206. For example, the capability of the external electronic device 210 stored in the memory 206 may be acquired from the external electronic device 210 via capability exchange with the external electronic device 210.

According to various embodiments, when no second type message is received from the external electronic device 210 (e.g., "No" in operation 303), the electronic device (e.g., the processor 120 or 202) may terminate the embodiment for performing capability exchange with the external electronic device 210.

According to various embodiments, the electronic device (e.g., the processor 120 or 202) may identify, in operation 307, whether the external electronic device 210 supports the first type message, based on the capability of the external electronic device 210.

According to various embodiments, when the external electronic device 210 supports the first type message (e.g., "Yes" in operation 307), the electronic device (e.g., the processor 120 or 202) may perform capability exchange with the external electronic device 210 in operation 309. According to an embodiment, the processor 202 may control the communication circuit 204 to transmit, to the external electronic device 210, a request message (e.g., an SIP OPTION request) including information on the capability of the electronic device 200. According to an embodiment, based on a transmission history of the message including information on the capability of the electronic device 200, the processor 202 may control the communication circuit 204 to selectively transmit, to the external electronic device 210, a request message (e.g., an SIP OPTION request) including information on the capability of the electronic device 200.

According to an embodiment, the processor 202 may identify the capability of the external electronic device 210 from a response message (e.g., an SIP OPTION response) related to capability exchange, which is received from the external electronic device 210 in response to the request message including information on the capability of the electronic device 200 via the communication circuit 204. According to an embodiment, the processor 202 may store, in the memory 206, the information on the capability of the external electronic device 210, which is identified via capability exchange with the external electronic device 210.

According to various embodiments, the electronic device (e.g., the processor 120 or 202) may terminate the embodiment for performing capability exchange with the external electronic device 210 when the external electronic device 210 is determined not to support the first type message (e.g., "No" in operation 307). According to an embodiment, when the external electronic device 210 does not support the first type message, the processor 202 may determine that the first type message cannot be transmitted to and/or received from the external electronic device 210. When the processor 202 determines that the first type message cannot be transmitted to and/or received from the external electronic device 210, capability exchange with the external electronic device 210 may be restricted.

According to various embodiments, when a second type message is received from the external electronic device 210 that supports the first type message, the electronic device 200 may perform capability exchange with the external electronic device 210. The external electronic device 210 may resume transmission of the first type message, based on capability exchange by the electronic device 200.

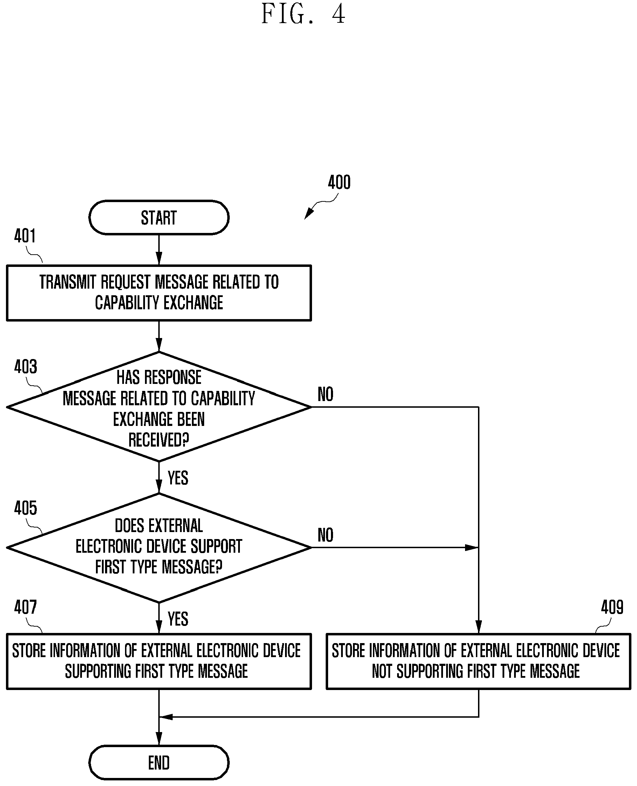

FIG. 4 is a flowchart 400 for identifying the capability of the external electronic device by the electronic device according to various embodiments. According to an embodiment, at least a part of FIG. 4 may be detailed operations of operation 309 of FIG. 3. In the following embodiments, respective operations may be sequentially performed, but are not necessarily performed sequentially. For example, the order of respective operations may be changed, and at least two operations may be performed in parallel. According to an embodiment, the electronic device of FIG. 4 may be the electronic device 101 of FIG. 1 or the electronic device 200 of FIG. 2.

According to various embodiments with reference to FIG. 4, the electronic device (e.g., the processor 120 of FIG. 1 or the processor 202 of FIG. 2) may transmit a request message related to capability exchange to the external electronic device 210 in operation 401 when the external electronic device 210 is determined to support the first type message (e.g., "Yes" in operation 307 of FIG. 3). According to an embodiment, the processor 202 may control the communication circuit 204 to transmit, to the external electronic device 210, a request message (e.g., an SIP OPTION request) including information on the capability of the electronic device 200. For example, the request message including information on the capability of the electronic device 200 may be selectively transmitted based on a transmission history of the request message.

According to various embodiments, the electronic device (e.g., the processor 120 or 202) may identify, in operation 403, whether a response message corresponding to the request message related to capability exchange is received.

According to various embodiments, when the response message corresponding to the request message related to capability exchange is received (e.g., "Yes" in operation 403), the electronic device (e.g., the processor 120 or 202) may identify, in operation 405, whether the external electronic device 210 supports the first type message, based on the information on the capability of the external electronic device 210, which is included in the response message.

According to various embodiments, when the external electronic device 210 is determined to support the first type message (e.g., "Yes" in operation 405), the electronic device (e.g., the processor 120 or 202) may store, in the memory 206, information on the external electronic device 210 supporting the first type message, in operation 407.

According to various embodiments, when the response message corresponding to the request message related to capability exchange is not received for a designated time period (e.g., "No" in operation 403), or the external electronic device 210 is determined not to support the first type message (e.g., "No" in operation 405), the electronic device (e.g., the processor 120 or 202) may store, in the memory 206, information on the external electronic device 210 not supporting the first type message, in operation 409.

According to various embodiments, when the external electronic device 210 is determined not to support the first type message, the electronic device 200 may restrict capability exchange with the external electronic device 210 even if a second type message is received from the external electronic device 210.

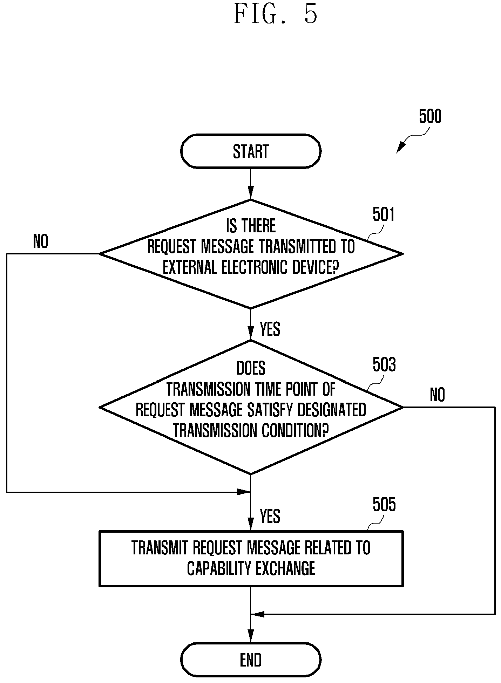

FIG. 5 is a flowchart 500 for transmitting a capability exchange request message by the electronic device according to various embodiments. According to an embodiment, at least a part of FIG. 5 may be detailed operations of operation 401 of FIG. 4. In the following embodiments, respective operations may be sequentially performed, but are not necessarily performed sequentially. For example, the order of respective operations may be changed, and at least two operations may be performed in parallel. According to an embodiment, the electronic device of FIG. 5 may be the electronic device 101 of FIG. 1 or the electronic device 200 of FIG. 2.

According to various embodiments with reference to FIG. 5, when the external electronic device 210 is determined to support the first type message (e.g., "Yes" in operation 307 of FIG. 3), the electronic device (e.g., the processor 120 of FIG. 1 or the processor 202 of FIG. 2) may identify, in operation 501, whether there exists a request message related to capability exchange, which has been previously transmitted to the external electronic device 210. According to an embodiment, the processor 202 may identify whether there exists a transmission history of a request message related to capability exchange associated with the external electronic device 210.

According to various embodiments, when there exists the request message related to capability exchange, which has been previously transmitted to the external electronic device 210 (e.g., "Yes" in operation 501), the electronic device (e.g., the processor 120 or 202) may identify, in operation 503, whether a transmission time point of the request message related to capability exchange, which has been transmitted to the external electronic device 210, satisfies a designated transmission condition. According to an embodiment, the processor 202 may determine that the transmission time point of the request message including information on the capability of the electronic device 200 satisfies the designated transmission condition, when the transmission is performed before a designated time range from a current time point. According to an embodiment, the processor 202 may determine that the transmission time point of the request message including information on the capability of the electronic device 200 does not satisfy the designated transmission condition, when the transmission is performed within the designated time range from the current time point.

According to various embodiments, when the transmission time point of the request message related to capability exchange, which has been transmitted to the external electronic device 210, is determined not to satisfy the designated transmission condition (e.g., "No" in operation 503), the electronic device (e.g., the processor 120 or 202) may terminate the embodiment for transmitting the capability exchange request message. According to an embodiment, when the transmission time point of the request message including information on the capability of the electronic device 200 has been transmitted within the designated time range from the current time point, the processor 202 may restrict transmission of a capability exchange request message in order to prevent redundant transmission of the capability exchange request message.

According to various embodiments, when there is no request message related to capability exchange, which has been previously transmitted to the external electronic device 210 (e.g., "No" in operation 501), or the transmission time point of the request message related to capability exchange, which has been transmitted to the external electronic device 210, is determined to satisfy the designated transmission condition (e.g., "Yes" in operation 503), the electronic device (e.g., the processor 120 or 202) may transmit, to the external electronic device 210, a request message (e.g., an SIP OPTION request) related to capability exchange, in operation 505.

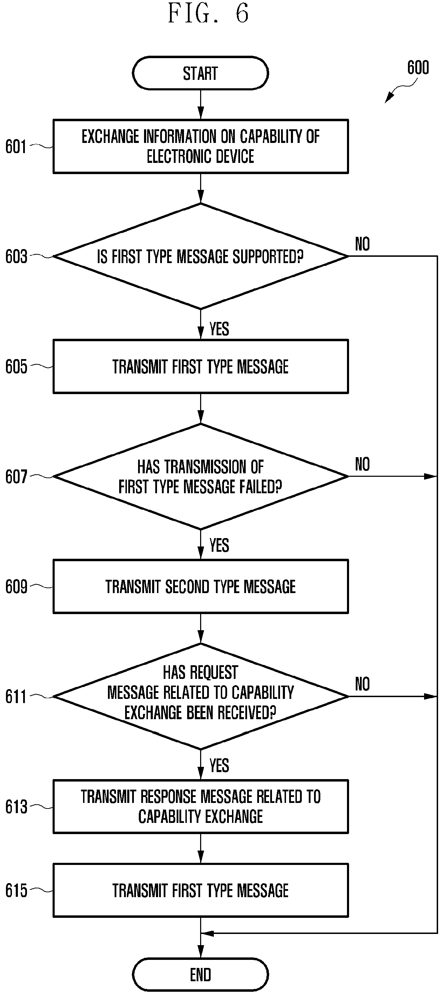

FIG. 6 is a flowchart 600 for transmitting a message by an external electronic device according to various embodiments. In the following embodiments, respective operations may be sequentially performed, but are not necessarily performed sequentially. For example, the order of respective operations may be changed, and at least two operations may be performed in parallel. According to an embodiment, an electronic device of FIG. 6 may be the electronic device 101 of FIG. 1 or the external electronic device 210 of FIG. 2.

According to various embodiments with reference to FIG. 6, the external electronic device (e.g., the processor 120 of FIG. 1 or the processor 212 of FIG. 2) may exchange information on the capability of the electronic device 200 in operation 601. According to an embodiment, in order to identify the capability of the electronic device 200 for message transmission, the processor 212 may control the communication circuit 214 to transmit, to the electronic device 200, a request message (e.g., an SIP OPTION request) including information on capability exchange of the external electronic device 210. According to an embodiment, the processor 212 may identify the capability of the electronic device 200 from a response message (e.g., an SIP OPTION response) related to capability exchange, which is received from the electronic device 200 in response to the request message including information on the capability of the external electronic device 210 via the communication circuit 214. According to an embodiment, the processor 212 may store, in the memory 216, information on the capability of the electronic device 200, which is identified via capability exchange with the electronic device 200.

According to various embodiments, in operation 603, the external electronic device (e.g., the processor 120 or 212) may identify whether the electronic device 200 and the external electronic device 210 support a first type message, based on the capability of the external electronic device 210 and the capability of the electronic device 200 identified via capability exchange.

According to various embodiments, the external electronic device (e.g., the processor 120 or 212) may terminate an embodiment for transmitting a first type message when the electronic device 200 and/or the external electronic device 210 are determined not to support the first type message (e.g., "No" in operation 603).

According to various embodiments, when the electronic device 200 and/or the external electronic device 210 are determined to support the first type message (e.g., "Yes" in operation 603), the external electronic device (e.g., the processor 120 or 212) may transmit the first type message to the electronic device 200 in operation 605. According to an embodiment, the processor 212 may control the communication circuit 214 to transmit, to the electronic device 200, a first type message including the body of a message to be transmitted to the electronic device 200.

According to various embodiments, the external electronic device (e.g., the processor 120 or 212) may determine, in operation 607, whether transmission of the first type message to the electronic device 200 has failed. According to an embodiment, when information on a reception state of the first type message is not received until a designated time elapses after transmission of the first type message to the electronic device 200, the processor 212 may determine that the transmission of the first type message has failed. According to an embodiment, when information on the reception state of the first type message, which is received from the electronic device 200, includes reception failure information, the processor 212 may determine that the transmission of the first type message has failed. According to an embodiment, when information on the reception state of the first type message, which is received from the electronic device 200, includes reception success information, the processor 212 may determine that the transmission of the first type message has been successful.

According to various embodiments, the external electronic device (e.g., the processor 120 or 212) may terminate the embodiment for transmitting the first type message when the transmission of the first type message to the electronic device 200 is determined to be successful (e.g., "No" in operation 607).

According to various embodiments, the external electronic device (e.g., the processor 120 or 212) may transmit a second type message in operation 609 when the transmission of the first type message to the electronic device 200 is determined to have failed (e.g., "Yes" in operation 607). According to an embodiment, when the transmission of the first type message is determined to have failed, the processor 212 may restrict transmission of a first type message. For example, a state in which transmission of a first type message is restricted may include a state in which transmission of the first type message to the electronic device 200 is restricted, but reception of the first type message is possible. According to an embodiment, the processor 212 may control the communication circuit 214 to transmit a second type message to the electronic device 200, based on the restriction on transmission of the first type message. For example, the processor 212 may control the communication circuit 214 to transmit, to the electronic device 200, a second type message that corresponds to the first type message, the transmission of which to the electronic device 200 is determined to have failed. For example, the processor 212 may control the communication circuit 214 to transmit, to the electronic device 200, a second type message including the body of a new message to be transmitted to the electronic device 200.

According to various embodiments, the external electronic device (e.g., the processor 120 or 212) may identify, in operation 611, whether a request message related to capability exchange is received from the electronic device 200. For example, the request message (e.g., the SIP OPTION request) related to capability exchange may include information on the capability of the electronic device 200.

According to various embodiments, the external electronic device (e.g., the processor 120 or 212) may terminate the embodiment for transmitting the first type message when no request message related to capability exchange is received from the electronic device 200 (e.g., "No" in operation 611).

According to various embodiments, the external electronic device (e.g., the processor 120 or 212) may transmit a response message related to capability exchange to the electronic device 200 in operation 613 when the request message related to capability exchange is received from the electronic device 200 (e.g., "Yes" in operation 611). For example, the response message (e.g., the SIP OPTION response) related to capability exchange may include information on the capability of the external electronic device 210.

According to various embodiments, the external electronic device (e.g., the processor 120 or 212) may transmit the first type message to the electronic device 200 in operation 615. According to an embodiment, when the electronic device 200 and the external electronic device 210 are determined to support the first type message, the processor 212 may control the communication circuit 214 to resume transmission of the first type message. According to an embodiment, the processor 212 may control the communication circuit 214 to transmit the first type message to the electronic device 200, based on resumption of transmission of the first type message.

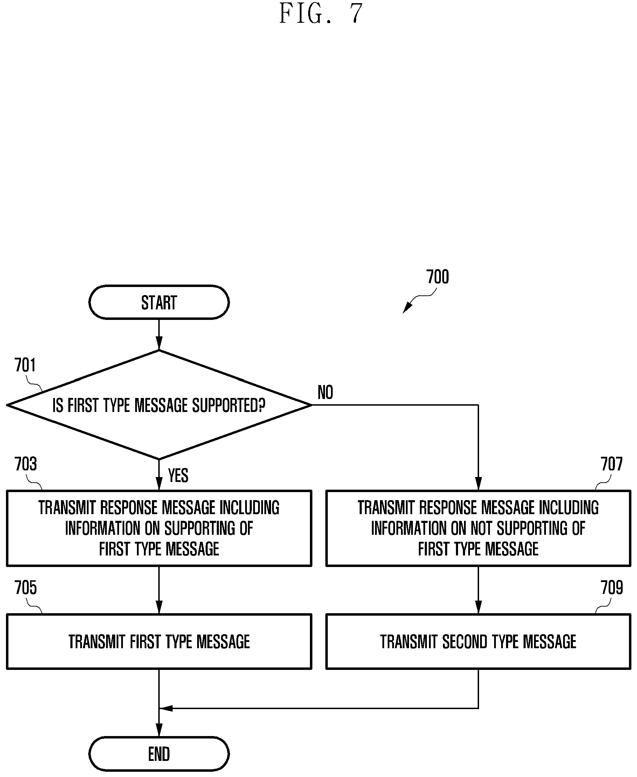

FIG. 7 is a flowchart 700 for performing capability exchange by the external electronic device according to various embodiments. According to an embodiment, at least a part of FIG. 7 may be detailed operations of operation 613 and operation 615 of FIG. 6. In the following embodiments, respective operations may be sequentially performed, but are not necessarily performed sequentially. For example, the order of respective operations may be changed, and at least two operations may be performed in parallel. According to an embodiment, the electronic device of FIG. 7 may be the electronic device 101 of FIG. 1 or the external electronic device 210 of FIG. 2.

According to various embodiments with reference to FIG. 7, when the request message related to capability exchange is received from the electronic device 200 (e.g., "Yes" in operation 611 of FIG. 6), the external electronic device (e.g., the processor 120 of FIG. 1 or the processor 212 of FIG. 2) may identify, in operation 701, whether the external electronic device 210 supports the first type message.

According to various embodiments, when the external electronic device 210 is determined to support the first type message (e.g., "Yes" in operation 701), the external electronic device (e.g., the processor 120 or 212) may transmit a response message (e.g., an SIP OPTION response) related to capability exchange, which includes information on supporting of the first type message, to the electronic device 200 in operation 703.

According to various embodiments, the external electronic device (e.g., the processor 120 or 212) may transmit the first type message to the electronic device 200 in operation 705. According to an embodiment, when the electronic device 200 and the external electronic device 210 are determined to support the first type message, the processor 212 may control the communication circuit 214 to transmit the first type message to the electronic device 200.

According to various embodiments, when the external electronic device 210 is determined not to support the first type message (e.g., "No" in operation 701), the external electronic device (e.g., the processor 120 or 212) may transmit a response message (e.g., an SIP OPTION response) related to capability exchange, which includes information on not supporting of the first type message, to the electronic device 200 in operation 707.

According to various embodiments, the external electronic device (e.g., the processor 120 or 212) may transmit a second type message to the electronic device 200 in operation 709. According to an embodiment, when the external electronic device 210 is determined not to support the first type message, the processor 212 may determine that the first type message cannot be transmitted to the electronic device 200. In this case, the processor 212 may control the communication circuit 214 to transmit the second type message to the electronic device 200.

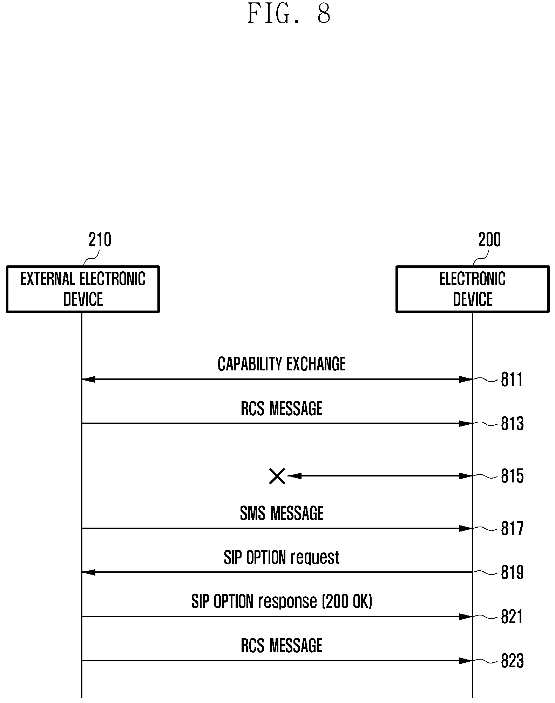

FIG. 8 is an example for providing an RCS function by the electronic device according to various embodiments.

According to various embodiments with reference to FIG. 8, the electronic device 200 and the external electronic device 210 may perform capability exchange (e.g., operation 811). According to an embodiment, in order to identify the capability of the electronic device 200 for message transmission, the external electronic device 210 may transmit, to the electronic device 200, a request message (e.g., an SIP OPTION request) including information on capability exchange of the external electronic device 210. For example, the electronic device 200 may identify, based on the request message, whether the external electronic device 210 supports an RCS function (e.g., the first type message). According to an embodiment, in response to the request message including information on the capability of the external electronic device 210, the electronic device 200 may transmit, to the external electronic device 210, a response message (e.g., an SIP OPTION response) including information on the capability of the electronic device 200. For example, the external electronic device 210 may identify, based on the response message, whether the electronic device 200 supports the RCS function (e.g., the first type message).

According to various embodiments, when the electronic device 200 and the external electronic device 210 are determined to support the RCS function (e.g., the first type message), the external electronic device 210 may transmit (e.g., operation 813) an RCS message to the electronic device 200. According to an embodiment, when the RCS message is received from the external electronic device 210, the electronic device 200 may transmit information on a reception state of the RCS message to the external electronic device 210.

According to various embodiments, when the transmission of the RCS message is determined to have failed, the external electronic device 210 may transmit (e.g., operation 817) an SMS message (or MMS message) corresponding to the RCS message to the electronic device 200. According to an embodiment, when information on the reception state of the RCS message is not received (e.g., operation 815) until a designated time elapses after transmission of the RCS message to the electronic device 200, the external electronic device 210 may determine that the transmission of the RCS message has failed. According to an embodiment, when the information on the reception state of the RCS message, which is received from the electronic device 200, includes reception failure information, the external electronic device 210 may determine that the transmission of the RCS message has failed.

According to an embodiment, when the transmission of the RCS message is determined to have failed, the external electronic device 210 may restrict transmission of an RCS message. The external electronic device 210 may transmit an SMS message (or MMS message) to the electronic device 200, based on the restriction on transmission of the RCS message.

According to various embodiments, when the SMS message (or MMS message) is received (e.g., operation 817) from the external electronic device 210 supporting the RCS function, the electronic device 200 may determine that the external electronic device 210 restricts transmission of the RCS message. The electronic device 200 may transmit (e.g., operation 819) the request message (e.g., the SIP OPTION request) related to capability exchange to the external electronic device 210 in order for the external electronic device 210 to resume transmission of the RCS message. For example, the request message (e.g., the SIP OPTION request) related to capability exchange may include the information on the capability of the electronic device 200.

According to various embodiments, when the request message related to capability exchange is received (e.g., operation 819) from the electronic device 200, the external electronic device 210 may transmit (e.g., operation 821), to the electronic device 200, a response message (e.g., an SIP OPTION response) related to capability exchange. For example, the response message (e.g., the SIP OPTION response) related to capability exchange may include the information on the capability of the external electronic device 210.

According to various embodiments, when it is determined, based on the capability exchange with the electronic device 200, that the electronic device 200 and the external electronic device 210 support the RCS function (e.g., the first type message), the external electronic device 210 may transmit (e.g., operation 823) the RCS message to the electronic device 200.

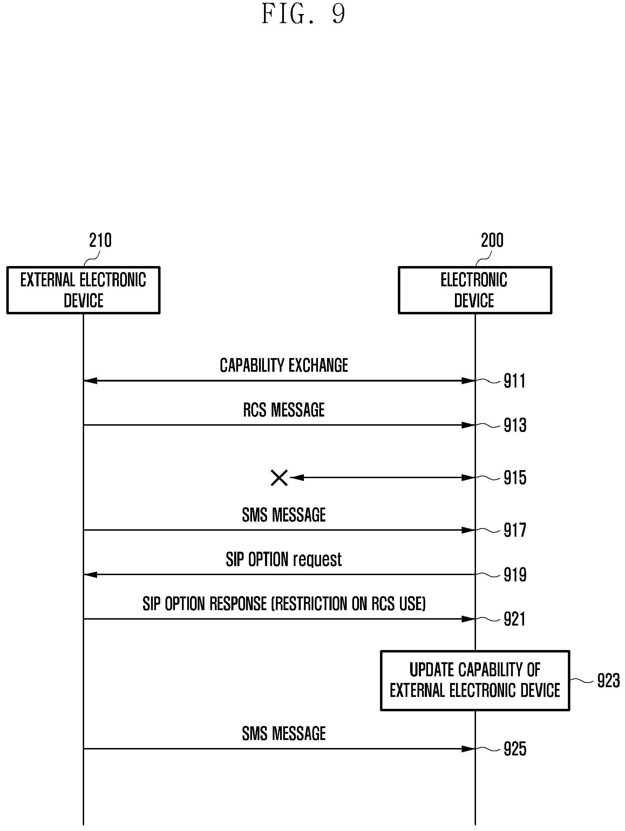

FIG. 9 is an example for updating the capability of the external electronic device by the electronic device according to various embodiments.

According to various embodiments with reference to FIG. 9, the electronic device 200 and the external electronic device 210 may perform capability exchange (e.g., operation 911). According to an embodiment, whether the electronic device 200 and the external electronic device 210 support the RCS function (e.g., the first type message) may be identified via capability exchange.

According to various embodiments, when it is determined, via capability exchange, that the electronic device 200 and the external electronic device 210 support the RCS function (e.g., the first type message), the external electronic device 210 may transmit (e.g., operation 913) an RCS message to the electronic device 200. According to an embodiment, when the RCS message is received from the external electronic device 210, the electronic device 200 may transmit information on a reception state of the RCS message to the external electronic device 210.

According to various embodiments, when the transmission of the RCS message is determined to have failed, the external electronic device 210 may transmit (e.g., operation 917) an SMS message (or MMS message) corresponding to the RCS message to the electronic device 200. According to an embodiment, when information on the reception state of the RCS message is not received (e.g., operation 915) until a designated time elapses after transmission of the RCS message to the electronic device 200, the external electronic device 210 may determine that the transmission of the RCS message has failed. According to an embodiment, when the information on the reception state of the RCS message, which is received from the electronic device 200, includes reception failure information, the external electronic device 210 may determine that the transmission of the RCS message has failed.

According to an embodiment, when the transmission of the RCS message is determined to have failed, the external electronic device 210 may determine that the electronic device 200 does not support the RCS function, so as to restrict transmission of an RCS message. The external electronic device 210 may transmit an SMS message (or MMS message) to the electronic device 200, based on the restriction on transmission of the RCS message. For example, the external electronic device 210 may transmit, to the electronic device 200, an SMS message (or MMS message) corresponding to the RCS message, the transmission of which to the electronic device 200 is determined to have failed.

According to various embodiments, when the SMS message (or MMS message) is received (e.g., operation 917) from the external electronic device 210 supporting the RCS function, the electronic device 200, for capability exchange with the external electronic device 210, may transmit (e.g., operation 919), to the external electronic device 210, a request message (e.g., an SIP OPTION request) related to capability exchange. For example, the request message (e.g., the SIP OPTION request) related to capability exchange may include information on the capability of the electronic device 200.

According to various embodiments, when the request message related to capability exchange is received (e.g., operation 919) from the electronic device 200, the external electronic device 210 may transmit (e.g., operation 921), to the electronic device 200, a response message (e.g., an SIP OPTION response) related to capability exchange. According to an embodiment, when not supporting the RCS function, the external electronic device 210 may transmit, to the electronic device 200, the response message (e.g., the SIP OPTION response) including information on not supporting of the RCS function.

According to various embodiments, when it is determined, based on the response message received from the external electronic device 210, that the external electronic device 210 does not support the RCS function, the electronic device 200 may update (e.g., operation 923) information on the capability of the external electronic device 210, which is stored in the memory 206 of the electronic device 200. According to an embodiment, when the external electronic device 210 is determined not to support the RCS function, the electronic device 200 may restrict capability exchange with the external electronic device 210 even if an SMS message (or MMS message) is received from the external electronic device 210.

According to various embodiments, when the external electronic device 210 does not support the RCS function (e.g., the first type message), the external electronic device 210 may transmit (e.g., operation 925) an SMS message (or MMS message) to the electronic device 200.

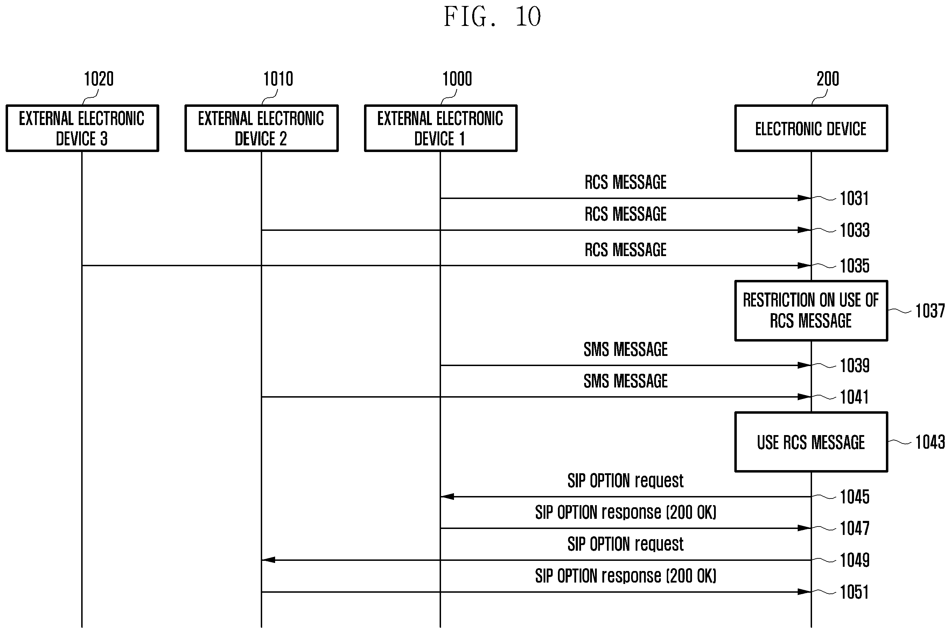

FIG. 10 is an example for performing capability exchange with multiple external electronic devices by the electronic device according to various embodiments.

According to various embodiments with reference to FIG. 10, the electronic device 200 may perform capability exchange with multiple external electronic devices 1000, 1010, and/or 1020. According to an embodiment, whether the electronic device 200 and the multiple external electronic devices 1000, 1010, and/or 1020 support the RCS function (e.g., the first type message) may be identified via capability exchange.

According to various embodiments, when it is determined, via capability exchange, that the electronic device 200 and external electronic device 1 1000 support the RCS function (e.g., the first type message), external electronic device 1 1000 may transmit (e.g., operation 1031) an RCS message to the electronic device 200. According to an embodiment, when the RCS message is received from external electronic device 1 1000, the electronic device 200 may transmit information on a reception state of the RCS message to external electronic device 1 1000.

According to various embodiments, when it is determined, via capability exchange, that the electronic device 200 and external electronic device 2 1010 support the RCS function (e.g., the first type message), external electronic device 2 1010 may transmit (e.g., operation 1033) an RCS message to the electronic device 200. According to an embodiment, when the RCS message is received from external electronic device 2 1010, the electronic device 200 may transmit information on a reception state of the RCS message to external electronic device 2 1010.

According to various embodiments, when it is determined, via capability exchange, that the electronic device 200 and external electronic device 3 1020 support the RCS function (e.g., the first type message), external electronic device 3 1020 may transmit (e.g., operation 1035) an RCS message to the electronic device 200. According to an embodiment, when the RCS message is received from external electronic device 3 1020, the electronic device 200 may transmit information on a reception state of the RCS message to external electronic device 3 1020.

According to various embodiments, when use of the RCS function is restricted (e.g., operation 1037), the electronic device 200 may generate a list of external electronic devices that support the RCS function among the external electronic devices 1000 and/or 1010 having transmitted an SMS message (or MMS message). According to an embodiment, when an SMS message (or MMS message) is received from external electronic device 1 1000 while the use of the RCS function is restricted (e.g., operation 1039), the electronic device 200 may identify whether external electronic device 1 1000 supports the RCS function, based on information on a capability of external electronic device 1 1000 stored in the electronic device 200. When external electronic device 1 1000 supports the RCS function, the electronic device 200 may add external electronic device 1 1000 to the list of external electronic devices.

According to an embodiment, when an SMS message (or MMS message) is received from external electronic device 2 1010 while the use of the RCS function is restricted (e.g., operation 1041), the electronic device 200 may identify whether external electronic device 2 1010 supports the RCS function, based on information on a capability of external electronic device 2 1010 stored in the electronic device 200. When external electronic device 2 1010 supports the RCS function, the electronic device 200 may add external electronic device 2 1010 to the list of external electronic devices. For example, the list of external electronic devices may include information on at least one external electronic device for performing capability exchange.

According to various embodiments, when the RCS function is enabled (e.g., operation 1043), the electronic device 200 may perform capability exchange with at least one external electronic device included in the list of external electronic devices. According to an embodiment, for capability exchange with external electronic device 1 1000 included in the list of external electronic devices, the electronic device 200 may transmit (e.g., operation 1045), to external electronic device 1 1000, a request message (e.g., an SIP OPTION request) related to capability exchange. For example, the request message (e.g., the SIP OPTION request) related to capability exchange may include information on the capability of the electronic device 200. According to an embodiment, when the request message related to capability exchange is received (e.g., operation 1045) from the electronic device 200, external electronic device 1 1000 may transmit (e.g., operation 1047), to the electronic device 200, a response message (e.g., an SIP OPTION response) related to capability exchange.

According to an embodiment, for capability exchange with external electronic device 2 1010 included in the list of external electronic devices, the electronic device 200 may transmit (e.g., operation 1049), to external electronic device 2 1010, a request message (e.g., an SIP OPTION request) related to capability exchange. For example, the request message (e.g., the SIP OPTION request) related to capability exchange may include information on the capability of the electronic device 200. According to an embodiment, when the request message related to capability exchange is received (e.g., operation 1049) from the electronic device 200, external electronic device 2 1010 may transmit (e.g., operation 1051), to the electronic device 200, a response message (e.g., an SIP OPTION response) related to capability exchange.

According to various embodiments, when it is determined, based on the capability exchange with the electronic device 200, that the electronic device 200 and external electronic device 1 1000 support the RCS function (e.g., the first type message), external electronic device 1 1000 may transmit an RCS message to the electronic device 200.

According to various embodiments, when it is determined, based on the capability exchange with the electronic device 200, that the electronic device 200 and/or external electronic device 2 1010 do not support the RCS function (e.g., the first type message), external electronic device 2 1010 may transmit an SMS message (or MMS message) to the electronic device 200.

According to various embodiments, an operation method of an electronic device (e.g., the electronic device 101 of FIG. 1 or the electronic device 200 of FIG. 2) may include, when the electronic device supports a first type message, identifying whether a second type message different from the first type message is received from an external electronic device, identifying a capability of the external electronic device, based on reception of the second type message from the external electronic device, and when it is determined, based on the capability of the external electronic device, that the external electronic device supports the first type message, performing capability exchange with the external electronic device.

According to various embodiments, the identifying of the capability of the external electronic device may include, based on reception of the second type message from the external electronic device, identifying whether information on the capability of the external electronic device exists in a memory of the electronic device, and when the information on the capability of the external electronic device exists in the memory, identifying the capability of the external electronic device stored in the memory.

According to various embodiments, the information on the capability of the external electronic device, which is stored in the memory, may be acquired via previously performed capability exchange with the external electronic device.

According to various embodiments, the performing of capability exchange with the external electronic device may include, when it is determined, based on the capability of the external electronic device, that the external electronic device supports the first type message, transmitting a request message related to capability exchange to the external electronic device, and receiving a response message corresponding to the request message from the external electronic device.

According to various embodiments, the transmitting to the external electronic device may include identifying whether there exists a transmission history of the request message related to capability exchange, and when there is no transmission history of the request message related to capability exchange, transmitting a request message related to capability exchange to the external electronic device.

According to various embodiments, the operation method may further include, when there exists a transmission history of the request message related to capability exchange, identifying a previous transmission time point of the request message related to capability exchange, and when the previous transmission time point of the request message related to capability exchange satisfies a designated transmission condition, transmitting a request message related to capability exchange to the external electronic device.

According to various embodiments, the operation method may further include, when the previous transmission time point of the request message related to capability exchange does not satisfy the designated transmission condition, restricting transmission of a request message related to capability exchange.

According to various embodiments, the request message may include information on a capability of the electronic device, and the response message may include information on the capability of the external electronic device.

According to various embodiments, the operation method may further include, when it is determined, based on capability exchange with the external electronic device, that the external electronic device does not support the first type message, updating information on the capability of the external electronic device, which is stored in a memory of the electronic device, based on not supporting of the first type message.

According to various embodiments, the first type message may include a rich communication suite (RCS) message, and the second type message may include at least one of a short message service (SMS) message or a multimedia message service (MMS) message.

The embodiments of the disclosure provided in the specification and the drawings present specific examples to easily explain the technical contents according to the embodiments of the disclosure and to help understanding of the embodiments of the disclosure, and are not intended to limit the scope of the embodiments of the disclosure.

## Claims

1. An electronic device (200) supporting a rich communication service, RCS, message comprising:
a communication circuitry (204);
at least one processor (202); and
a memory (203) storing instructions which, when executed by the at least one processor, cause the electronic device (200) to:
identify (811) that an external electronic device (210) supports the RCS message by performing capability exchange with the external electronic device (210),
transmit (819), via the communication circuitry (204) to the external electronic device (210), a request message including information relating to support for the RCS message of the electronic device (200) based on receipt of a short message service, SMS, message or a multimedia message service, MMS, message from the external electronic device (210), and
receive (821) from the external electronic device (210), via the communication circuitry (204), a response message corresponding to the request message, wherein the response message includes information on the capability of the external electronic device (210).

2. The electronic device (200) of claim 1, wherein the memory (203) storing instructions which, when executed by the at least one processor (202), cause the electronic device (200) to:
when the SMS message or the MMS message is received from the external electronic device (210), determine (817) that the external electronic device (210) restricts transmission of the RCE message; and
based on determining that the external electronic device (210) restricts transmission of the RCS message, transmit the request message to the external electronic device (210).

3. The electronic device (200) of claim 1, wherein the memory (203) storing instructions which, when executed by the at least one processor (202), cause the electronic device (200) to, in case that it is determined, based on capability exchange with the external electronic device (210), that the external electronic device (210) does not support the RCS message, update information on a capability of the external electronic device (210), which is stored in the memory (203), based on not supporting of the RCS message.

4. An operation method of an electronic device (200) supporting a rich communication service, RCS, message, the method comprising:
identify (811) that an external electronic device (210) supports the RCS message by performing capability exchange with the external electronic device (210);
transmitting (819), to the external electronic device (210), a request message including information relating to support for the RCS message of the electronic device (200) based on receipt of a short message service, SMS, message or a multimedia message service, MMS, message from the external electronic device (210), and
receiving (821), from the external electronic device (210), a response message corresponding to the request message, wherein the response message includes information on the capability of the external electronic device (210).

5. The method of claim 4, wherein the transmitting of the request message comprises:
when the SMS message or the MMS message is received from the external electronic device (210), determining (817) that the external electronic device (210) restricts transmission of the RCE message; and
based on the determining that the external electronic device (210) restricts transmission of the RCE message, transmitting the request message to the external electronic device (210).

6. The method of claim 4, further comprising, in case that it is determined, based on capability exchange with the external electronic device (210), that the external electronic device (210) does not support the RCS message, updating information on a capability of the external electronic device (210), which is stored in a memory (203) of the electronic device (200), based on not supporting of the RCS message.

## Patentansprüche

1. Elektronisches Gerät (200), das eine Rich Communication Service (RCS)-Nachricht unterstützt, umfassend:
eine Kommunikationsschaltung (204);
mindestens einen Prozessor (202); und
einen Speicher (203), in dem Befehle gespeichert sind, die, wenn sie von dem mindestens einen Prozessor ausgeführt werden, das elektronische Gerät (200) dazu veranlassen:
zu identifizieren (811), dass ein externes elektronisches Gerät (210) die RCS-Nachricht unterstützt, indem ein Fähigkeitsaustausch mit dem externen elektronischen Gerät (210) durchgeführt wird,
über die Kommunikationsschaltung (204) eine Anforderungsnachricht mit Informationen bezüglich der Unterstützung der RCS-Nachricht des elektronischen Geräts (200) basierend auf dem Empfang einer Short Message Service (SMS)-Nachricht oder einer Multimedia Message Service (MMS)-Nachricht vom externen elektronischen Gerät (210) an das externe elektronische Gerät (210) zu senden (819), und
über die Kommunikationsschaltung (204) von dem externen elektronischen Gerät (210) eine der Anforderungsnachricht entsprechende Antwortnachricht zu empfangen (821), wobei die Antwortnachricht Informationen über die Fähigkeit des externen elektronischen Geräts (210) enthält.

2. Elektronisches Gerät (200) nach Anspruch 1, wobei in dem Speicher (203) Befehle gespeichert sind, die, wenn sie von dem mindestens einen Prozessor (202) ausgeführt werden, das elektronische Gerät (200) dazu veranlassen:
wenn die SMS-Nachricht oder die MMS-Nachricht von dem externen elektronischen Gerät (210) empfangen wird, festzustellen (817), dass das externe elektronische Gerät (210) die Sendung der RCE-Nachricht einschränkt; und
auf der Grundlage der Feststellung, dass das externe elektronische Gerät (210) die Sendung der RCS-Nachricht einschränkt, die Anforderungsnachricht an das externe elektronische Gerät (210) zu senden.

3. Elektronisches Gerät (200) nach Anspruch 1, wobei in dem Speicher (203) Befehle gespeichert sind, die, wenn sie von dem mindestens einen Prozessor (202) ausgeführt werden, das elektronische Gerät (200) dazu veranlasst, für den Fall, dass auf der Grundlage eines Fähigkeitsaustauschs mit dem externen elektronischen Gerät (210) festgestellt wird, dass das externe elektronische Gerät (210) die RCS-Nachricht nicht unterstützt, Informationen über eine Fähigkeit des externen elektronischen Geräts (210), die im Speicher (203) gespeichert sind, auf der Grundlage der Nichtunterstützung der RCS-Nachricht zu aktualisieren.

4. Verfahren zum Betreiben eines elektronischen Geräts (200), das eine Rich Communication Service (RCS)-Nachricht unterstützt, wobei das Verfahren Folgendes umfasst:
Identifizieren (811), dass ein externes elektronisches Gerät (210) die RCS-Nachricht unterstützt, indem ein Fähigkeitsaustausch mit dem externen elektronischen Gerät (210) durchgeführt wird;
Senden (819) einer Anforderungsnachricht an das externe elektronische Gerät (210), die Informationen bezüglich der Unterstützung der RCS-Nachricht des elektronischen Geräts (200) enthält, basierend auf dem Empfang einer Short Message Service (SMS)-Nachricht oder einer Multimedia Message Service (MMS)-Nachricht vom externen elektronischen Gerät (210), und
Empfangen (821) einer der Anforderungsnachricht entsprechenden Antwortnachricht von dem externen elektronischen Gerät (210), wobei die Antwortnachricht Informationen über die Fähigkeit des externen elektronischen Geräts (210) enthält.

5. Verfahren nach Anspruch 4, wobei das Senden der Anforderungsnachricht Folgendes umfasst:
Feststellen (817), dass das externe elektronische Gerät (210) die Sendung der RCE-Nachricht einschränkt, wenn die SMS-Nachricht oder die MMS-Nachricht von dem externen elektronischen Gerät (210) empfangen wird; und
Senden der Anforderungsnachricht an das externe elektronische Gerät (210) basierend auf der Feststellung, dass das externe elektronische Gerät (210) die Sendung der RCE-Nachricht einschränkt.

6. Verfahren nach Anspruch 4, umfassend ferner das Aktualisieren in einem Speicher (203) des elektronischen Geräts (200) gespeicherter Informationen über eine Fähigkeit des externen elektronischen Geräts (210) auf der Grundlage der Nichtunterstützung der RCS-Nachricht für den Fall, dass auf der Grundlage eines Fähigkeitsaustauschs mit dem externen elektronischen Gerät (210) festgestellt wird, dass das externe elektronische Gerät (210) die RCS-Nachricht nicht unterstützt.

## Revendications

1. Dispositif électronique (200) soutenant un message de service de communication riche, RCS, comprenant :
une circuiterie de communication (204) ;
au moins un processeur (202) ; et
une mémoire (203) stockant des instructions qui, une fois exécutées par l'au moins un processeur, amènent le dispositif électronique (200) à :
identifier (811) qu'un dispositif électronique externe (210) soutient le message RCS en effectuant un échange de capacité avec le dispositif électronique externe (210),
transmettre (819), via la circuiterie de communication (204) jusqu'au dispositif électronique externe (210), un message de demande comportant des informations concernant un support pour le message RCS du dispositif électronique (200) sur la base d'une réception d'un message de service de message court, SMS, ou d'un message de service de message multimédia, MMS, à partir du dispositif électronique externe (210), et
recevoir (821) à partir du dispositif électronique externe (210), via la circuiterie de communication (204), un message de réponse correspondant au message de demande, dans lequel le message de réponse comporte des informations sur la capacité du dispositif électronique externe (210).

2. Dispositif électronique (200) selon la revendication 1, dans lequel la mémoire (203) stockant des instructions qui, une fois exécutées par l'au moins un processeur (202), amènent le dispositif électronique (200) à :
lorsque le message SMS ou le message MMS est reçu à partir du dispositif électronique externe (210), déterminer (817) que le dispositif électronique externe (210) restreint une transmission du message RCE ; et
sur la base de la détermination du fait que le dispositif électronique externe (210) restreint une transmission du message RCS, transmettre le message de demande jusqu'au dispositif électronique externe (210).

3. Dispositif électronique (200) selon la revendication 1, dans lequel la mémoire (203) stockant des instructions qui, une fois exécutées par l'au moins un processeur (202), amènent le dispositif électronique (200) à, dans le cas où il est déterminé, sur la base d'un échange de capacité avec le dispositif électronique externe (210), que le dispositif électronique externe (210) ne soutient pas le message RCS, mettre à jour des informations sur une capacité du dispositif électronique externe (210), qui sont stockées dans la mémoire (203), sur la base d'un non-support du message RCS.

4. Procédé de fonctionnement d'un dispositif électronique (200) soutenant un message de service de communication riche, RCS, le procédé comprenant :
identifier (811) qu'un dispositif électronique externe (210) soutient le message RCS en effectuant un échange de capacité avec le dispositif électronique externe (210) ;
transmettre (819), jusqu'au dispositif électronique externe (210), un message de demande comportant des informations concernant un support pour le message RCS du dispositif électronique (200) sur la base d'une réception d'un message de service de message court, SMS, ou d'un message de service de message multimédia, MMS, à partir du dispositif électronique externe (210), et
recevoir (821) à partir du dispositif électronique externe (210), un message de réponse correspondant au message de demande, dans lequel le message de réponse comporte des informations sur la capacité du dispositif électronique externe (210).

5. Procédé selon la revendication 4, dans lequel la transmission du message de demande consiste à :
lorsque le message SMS ou le message MMS est reçu à partir du dispositif électronique externe (210), déterminer (817) que le dispositif électronique externe (210) restreint une transmission du message RCE ; et
sur la base de la détermination du fait que le dispositif électronique externe (210) restreint une transmission du message RCE, transmettre le message de demande jusqu'au dispositif électronique externe (210).

6. Procédé selon la revendication 4, consistant en outre à, dans le cas où il est déterminé, sur la base d'un échange de capacité avec le dispositif électronique externe (210), que le dispositif électronique externe (210) ne soutient pas le message RCS, mettre à jour des informations sur une capacité du dispositif électronique externe (210), qui sont stockées dans une mémoire (203) du dispositif électronique (200), sur la base d'un non-support du message RCS.
